Europäisches Patentamt

European Patent Office

Office européen des brevets

(19)

(11) Veröffentlichungsnummer: **0 121 820**
**B1**

(12)

# EUROPÄISCHE PATENTSCHRIFT

(45) Veröffentlichungstag der Patentschrift:
28.10.87

(51) Int. Cl.⁴: **B 60 R 13/06**

(21) Anmeldenummer: 84102819.4

(22) Anmeldetag: 15.03.84

(54) In der Höhe verstellbare Fensterscheibe, insbesondere für Kraftfahrzeuge.

(30) Priorität: 07.04.83 DE 3312470
07.04.83 DE 3312473

(43) Veröffentlichungstag der Anmeldung:
17.10.84 Patentblatt 84/42

(45) Bekanntmachung des Hinweises auf die Patenterteilung:
28.10.87 Patentblatt 87/44

(84) Benannte Vertragsstaaten:
DE FR GB IT SE

(56) Entgegenhaltungen:
EP - A - 0 065 336
EP - A - 0 063 696
FR - A - 2 279 581
FR - A - 2 518 025

(73) Patentinhaber: Adam Opel Aktiengesellschaft,
Bahnhofsplatz 1 Postfach 1560, D-6090 Rüsselsheim
(DE)

(72) Erfinder: Warner, Hermann, Ulmenstrasse 13,
D-6097 Trebur 1 (DE)

(74) Vertreter: Baumgarten, Jochem, Dipl.-Ing. et al, C/O
Adam Opel Aktiengesellschaft
Bahnhofsplatz 1 Postfach 1560, D-6090 Rüsselsheim
(DE)

ACTORUM AG

## Beschreibung

Die Erfindung bezieht sich auf eine in der Höhe verstellbare Fensterscheibe, insbesondere für Kraftfahrzeuge, die bündig mit den angrenzenden Karosserieteilen verläuft und deren Führungsmittel sowie die Fensterdichtung auf der Innenseite der Fensterscheibe angeordnet sind, wobei das Führungsmittel am Fensterrahmen unter Zwischenschaltung eines elastisch nachgiebigen Führungsprofils geführt ist, das entgegen der Vorspannung der Fensterdichtung gegen das Führungsmittel vorgespannt ist und Führungsprofil und Führungsmittel mit Hinterschneidungen versehen sind.

Bei einer durch die DE-A-3 110 669 bekanntgewordenen Ausführung ist die Fensterscheibe selbst oder deren Führungsmittel, in diesem Falle hier eine Führungsschiene, in senkrechter Richtung durch die Fensterdichtung selbst oder durch das Führungsprofil für die Führungsschiene geführt. Diese Führung ist allerdings nach beiden Richtungen nur dann gegeben, wenn am gegenüberliegenden Rand der Fensterscheibe die gleiche Dichtung bzw. das gleiche Führungsprofil vorgesehen sind. Die Verhältnisse erlauben es jedoch meist nicht, die Fensterscheibe an ihrem vorderen und hinteren Rand in gleicher Weise zu führen und damit eine gute Führung der Fensterscheibe in Längsrichtung zu erreichen.

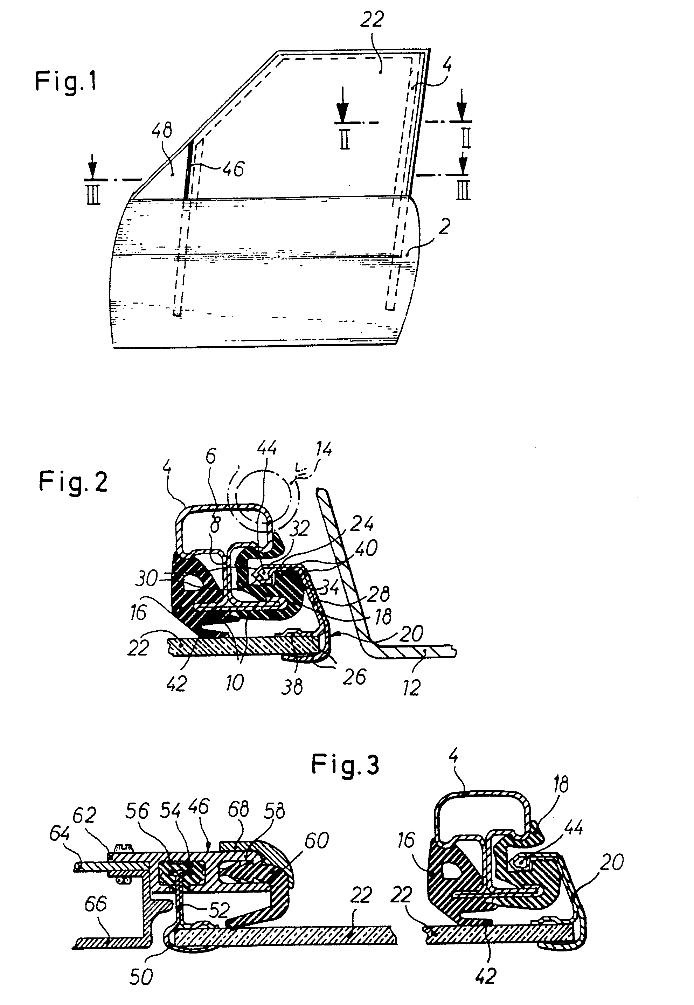

Durch die FR-A-2 518 025 ist es bekanntgeworden, das Führungsprofil und das Führungsmittel mit Hinterschneidungen zu versehen. Dadurch ist die verstellbare Fensterscheibe nur an einem Seitenrand, d.h. nur mit einem Führungsmittel in Längsrichtung geführt. Bei dieser bekannten Anordnung muss aber die Fensterscheibe von unten oder von oben in die Führung eingeführt werden, was montagemässig nachteilig ist. Allerdings kann dort bei einem Ausführungsbeispiel (Fig. 2) das Führungsprofil in den Fensterrahmen klipsartig eingerastet werden.

Der Erfindung liegt daher die Aufgabe zugrunde, eine in der Höhe verstellbare Fensterscheibe zu schaffen, die nicht nur an einem Seitenrand, d.h. nur mit einem Führungsmittel in der Längsrichtung geführt ist, sondern die auch den Vorteil hat, dass das Einsetzen der Scheibe an jeder Stelle in einfacher Weise vorgenommen werden kann, d.h. ohne dass die Scheibe von unten oder oben in die Führung eingeführt werden muss.

Dies wird erfindungsgemäss dadurch erreicht, dass die Hinterschneidung am Führungsprofil lediglich an der von der Scheibe abgewandten Seite und die Hinterschneidung am Führungsmittel (Führungsschiene) lediglich an der der Scheibe zugewandten Seite des Führungsprofils vorgesehen ist und die Hinterschneidung des Führungsprofils das Einklipsen der Führungsschiene zulässt.

Auf diese Weise ist die Führungsschiene in dem Führungsprofil gehalten. Es wird dadurch nur eine geringe Verschiebung in der Längsrichtung zugelassen. Bei der Montage schnappt die profilierte Führungsschiene in das Führungsprofil ein.

Nach einem weiteren Merkmal der Erfindung ist die Hinterschneidung der Führungsschiene von einer Umbördelung an der freien Kante der Führungsschiene gebildet und die Hinterschneidung weist Schrägflächen für das Einklipsen in das Führungsprofil auf. Durch diese Schrägflächen wird ein leichtes Einklipsen bzw. Einschnappen der Führungsschiene von der Seite her in das Führungsprofil erreicht. Das beflockte Führungsprofil ist so ausgebildet, dass die Stellen an bzw. neben der Hinterschneidung bei der Montage der Führungsschiene nachgeben und dann die Führungsschiene mit den erforderlichen Toleranzen im Bereich neben der Hinterschneidung und einer Begrenzungswand, die durch die Führungsbahn gebildet wird, gleiten kann. Als Gleitflächen können dabei an die Hinterschneidung nach aussen sich anschliessende, im Winkel zueinander verlaufende Flächen dienen. Durch die Führung der Fensterscheibe in Längsrichtung wird ein Festpunkt im Fensterheber überflüssig.

Die Führungsschiene besteht in vorteilhafter Weise im Querschnitt gesehen aus zwei in an sich bekannter Weise etwa parallel zur Fensterscheibe verlaufenden Schenkeln, deren einer als Doppelschenkel den Rand der Fensterscheibe von beiden Seiten her umgreift und deren anderer Schenkel mit dem Führungsprofil zusammenwirkt und beide Schenkel auf derselben Seite mit einem Steg verbunden sind, der etwa in Richtung der Schwinglinie der Tür verläuft. Diese Ausführung ist sehr platzsparend. Der Steg schliesst den Spalt zwischen Glas und Fensterrahmen, so dass dadurch schon eine gewisse Abdichtung erreicht wird.

Zweckmässigerweise ist die Führungsschiene von einem zusammengefalteten Blechstreifen gebildet, dessen freie Enden im Abstand voneinander verlaufen und den Doppelschenkel bilden und dessen anderes gefaltetes Ende den anderen Schenkel mit der Hinterschneidung bildet.

Günstig ist es auch, wenn die den Doppelschenkel bildenden und den Rand der Fensterscheibe zwischen sich aufnehmenden Enden mit Hohlräumen zur Aufnahme von überschüssigem Kleber versehen sind. Die Klebstoffmenge braucht dann nicht genau dosiert zu werden, da überschüssiger Klebstoff in diese Hohlräume gelangen kann und deshalb zu keinem hässlichen Aussehen führt.

Die erforderlichen Gleitflächen für die Führungsschiene lassen sich am einfachsten schaffen, wenn das Strangprofil des Führungsprofils an die Hinterschneidung anschliessend zwei im Winkel zueinander stehende Flächen bildet, die als Gleitflächen für den Schenkel und den Steg der Führungsschiene dienen.

Die Erfindung hat ferner ebenfalls eine entsprechend der FR-A-2 518 025 in der Höhe verstellbare Fensterscheibe, insbesondere für Kraftfahrzeuge zum Gegenstand, die bündig mit den angrenzenden Karosserieteilen verläuft und deren Dichtung und Führungsmittel auf der Innenseite der Scheibe angeordnet sind, wobei die Führungsmittel mit Führungsvorsprüngen in Führungsprofile eingreifen. Wenn die Fensterscheibe an zwei Seiten geführt wird, ergibt sich das Problem, wie die Fensterscheibe mit ihren Führungsmitteln in die Führung eingeführt werden kann. Bei dem üblichen Verfahren zur Herstellung der Tür wird diese mit miteinander verbundenem Türinnen- und Türaussenblech und Fensterrahmen zur weiteren Montage, d.h. zum Einbau der Fensterscheibe, bereitgestellt. Ein Einfädeln der Fensterscheibe mit ihren Führungsmitteln in die Führungsbahnen des Fensterrahmens ist dabei nicht ohne weiteres möglich.

Auch bei beidseitig geführter Fensterscheibe kann die Fensterscheibe mit ihren Führungsmitteln in die Führungsbahnen von aussen bzw. von der Seite her eingesetzt werden, wenn die Führungsvorsprünge der an der Hinterkante der Fensterscheibe vorgesehenen Führungsschiene nach vorne gerichtet sind, das Führungsprofil nach hinten offen ist und die Führungsvorsprünge des an der Vorderkante der Fensterscheibe vorgesehenen Führungsmittels etwa quer zur Scheibenebene durch Ausschnitte der zugehörigen Führungsbahn in diese einsetzbar und in dieser in allen Richtungen geführt sind.

Durch diese Merkmale wird eine Montage der Fensterscheibe dadurch erreicht, dass die Führungsvorsprünge des hinteren Führungsmittels etwa in Fahrzeuglängsrichtung in die Führungsbahn einführbar und die Führungsvorsprünge des vorderen Führungsmittels etwa quer dazu oder schräg in die Führungsbahn einsetzbar sind. Natürlich kann z.B. bei Hintertüren sich der Sachverhalt umdrehen, d.h. das, was bezüglich der Hinterkante gesagt war, kann für die Vorderkante und das für die Vorderkante Gesagte für die Hinterkante gelten.

Eine besonders vorteilhafte Ausführungsform, die eine zur Fensterdichtung zusätzliche Abdichtung ergibt und die die Montage erleichtert, wird dann erreicht, wenn das an der Hinterkante der Fensterscheibe vorgesehene Führungsmittel von einer in das nach hinten offene Führungsprofil eingreifenden Führungsschiene gebildet ist und das vordere Führungsmittel aus an einer Fassungsschiene angeordneten Gleitstücken besteht.

Zweckmässig ist dabei die vordere Führungsbahn C-förmig ausgebildet und am oberen Ende mit einem Ausschnitt zum Einführen der Gleitstücke versehen. In diesem Fall muss die Fensterscheibe nach dem seitlichen Einsetzen nach einem bestimmten Masse in vertikaler Richtung in den Führungsbahnen verschoben werden.

Dieses Verschieben kann reduziert werden, bzw. ist kaum noch erforderlich, um die Fensterscheibe in die richtige Lage zur Befestigung an den Fensterheber zu bringen, wenn nach einem weiteren Merkmal der Erfindung die vordere Führungsbahn schräg nach hinten offen, d.h. ihr äusserer und hinterer Steg teilweise weggeschnitten sind und das Gleitstück einen federnden Abschnitt aufweist, der ein schräges Einschnappen des Gleitstückes in die Führungsbahn erlaubt. In diesem Falle kann die Fensterscheibe in jeder beliebigen Höhenlage in die Führungsbahnen eingesetzt werden.

Dies ist auch dann der Fall, wenn nach einem weiteren Merkmal der Erfindung die vordere Führungsbahn eine grössere Breite als die des Gleitstückes aufweist und einen Freischnitt mit einer Breite zum Einsetzen des Gleitstückes besitzt und in die Führungsbahn nach dem Einsetzen des Gleitstückes ein Anschlagprofil zur Führung des Gleitstückes eingesetzt ist.

Die Erfindung wird anhand von Ausführungsbeispielen näher erläutert. In der Zeichnung zeigen

Fig. 1 eine Fahrzeugtür in Seitenansicht,
Fig. 2 einen Schnitt nach Linie II–II in Fig. 1,
Fig. 3 einen Schnitt nach Linie III–III in Fig. 1,
Fig. 4 eine weitere Ausführungsform der vorderen Fensterscheibenführung entsprechend dem linken Teilschnitt in Fig. 3,
Fig. 5 eine Ansicht des Gleitstückes in Fig. 4 in Richtung des Pfeiles V,
Fig. 6 ein Schema für die Einsetzrichtung der Fensterscheibe,
Fig. 7 eine weitere Ausführungsform der vorderen Fensterscheibenführung,
Fig. 8 eine andere Ausbildung der vorderen Führungsschiene mit Führungsbahn,
Fig. 9 eine Seitenansicht der vorderen Fensterscheibenführung,
Fig. 10 eine andere Fensterausbildung für die Fahrzeugtür,
Fig. 11 einen Schnitt nach Linie XI–XI in Fig. 10 und
Fig. 12 eine andere Ausbildung des Schnittes nach Linie XI–XI in Fig. 10.

Gemäss Fig. 1 ist eine Fahrzeugtür 2 mit einem nach dem Fahrzeuginneren zu liegenden Fensterrahmen 4 versehen, dessen seitliche Abschnitte sich zwischen Türinnen- und -aussenblech hinein nach unten erstrecken. Am Fensterrahmen 4 ist eine Fensterscheibe 22 geführt. Die Führung der Fensterscheibe erfolgt am hinteren Scheibenrand. Zusätzlich kann der vordere Scheibenrand in einer Führungsschiene 46 geführt sein. Diese Führungsschiene 46 begrenzt ein Spiegeldreieck 48, das zur Befestigung eines nicht dargestellten Aussenrückspiegels dient.

Der Fensterrahmen 4 kann aus einem gerollten Stahlhohlprofil bestehen. Er hat den in Fig. 2 gezeigten Querschnitt, der aus einem Rohr 6, einem daran anschliessenden Steg 8 und zwei davon im rechten Winkel abgehenden Flansche 10 besteht. Mit 12 ist ein Teil einer Türsäule bezeichnet und mit 14 eine Türdichtung.

Am Fensterrahmen 4 ist das Strangprofil einer Fensterdichtung 16 angebracht sowie ein extrudiertes Führungsprofil 18. Mit dem Rand der Fensterscheibe 22 ist eine Führungsschiene 20 verbunden. Diese besteht, wie ersichtlich, aus einem zusammengefalteten Blechstreifen, der einen Schenkel 24 bildet, sowie einem Doppelschenkel 26, dessen beide Teile bzw. Enden den Rand der Fensterscheibe 22 umfassen. Ein die Schenkel 24 und 26 verbindender Steg ist mit 28 bezeichnet und verläuft in der Schwinglinie der Tür. Der Schenkel 24 verdickt sich an seinem freien Ende derart, dass eine Nase 44 entsteht, die mit zwei Schrägflächen 30 versehen ist und eine Hinterschneidung 32 hat.

Das Führungsprofil 18 ist mit einer Hinterschneidung 34 versehen, die mit der Hinterschneidung 32 an der Führungsschiene 20 zusammenwirkt. Durch die Hinterschneidungen 32 und 34 ist die Fensterscheibe 22 in Längsrichtung des Fahrzeugs geführt. Durch die Schrägflächen 30 an der Nase 44 des Schenkels 24 kann eine leichte Montage erfolgen, indem die Führungsschiene 20 in das Führungsprofil 18 einschnappt.

Die Enden des Schenkels 26 sind mit dem Scheibenrand verklebt. Hohlräume 38 dienen zur Aufnahme von überschüssigem Kleber. Zwei im Winkel zueinander stehende Flächen 40 des Führungsprofils 18, die an die Hinterschneidung 34 anschliessen, dienen als Gleitflächen für die Führungsschiene 20. Eine Lippe 42 der Fensterdichtung 16 bewirkt, dass die Führungsschiene 20 gegen die Fläche 40 bzw. Flächen 40 vorgespannt ist.

Bei der in Fig. 3 dargestellten Ausführungsform ist die Fensterscheibe 22 an ihrer hinteren Kante genau wie in Fig. 2 dargestellt geführt. Am Fensterrahmen 4 sind wiederum die Fensterdichtung 16 und das Führungsprofil 18 angebracht, die beide aus einem Strangprofil aus Kunststoff oder Gummi mit entsprechender Elastizität bestehen. Die Lippe 42 der Fensterdichtung 16 liegt an der Fensterscheibe 22 an, an deren Rand die Führungsschiene 20 zum Beispiel durch ein Klebemittel befestigt ist. Die Schiene 20 greift mit ihrer Nase 44 in das nach rechts, also nach hinten, offene Führungsprofil 18 ein. Das Führungsprofil 18 und die Nase 44 sind mit den erwähnten Hinterschneidungen versehen, so dass die Führungsschiene 20 beim Einführen mit ihrer Nase 44 in das Führungsprofil 18 einschnappt.

Die vordere Kante der Fensterscheibe 22 ist mit einer Fassungsschiene 50 versehen, die einen Schenkel 52 aufweist, der mit einem oder mehreren, in der Regel zwei, Gleitstücken 54 versehen ist. Die Gleitstücke 54, die an den Schenkeln 52 angespritzt sind, sind in einer an der Führungsschiene 46 ausgebildeten Führungsbahn 56 geführt. Die Führungsschiene 46 weist einen U-förmigen Kanal 58 auf, der zur Halterung einer Fensterdichtung 60 dient. Die Führungsschiene 46 besitzt ferner einen Flansch 62, mit dem sie mit einer Türverstärkung 64 verbunden ist. Mit 66 ist eine Abdeckung des Spiegeldreiecks 48 für den Spiegel bezeichnet und mit 68 eine innere Blende, die vom Kanal 58 mitgehalten wird.

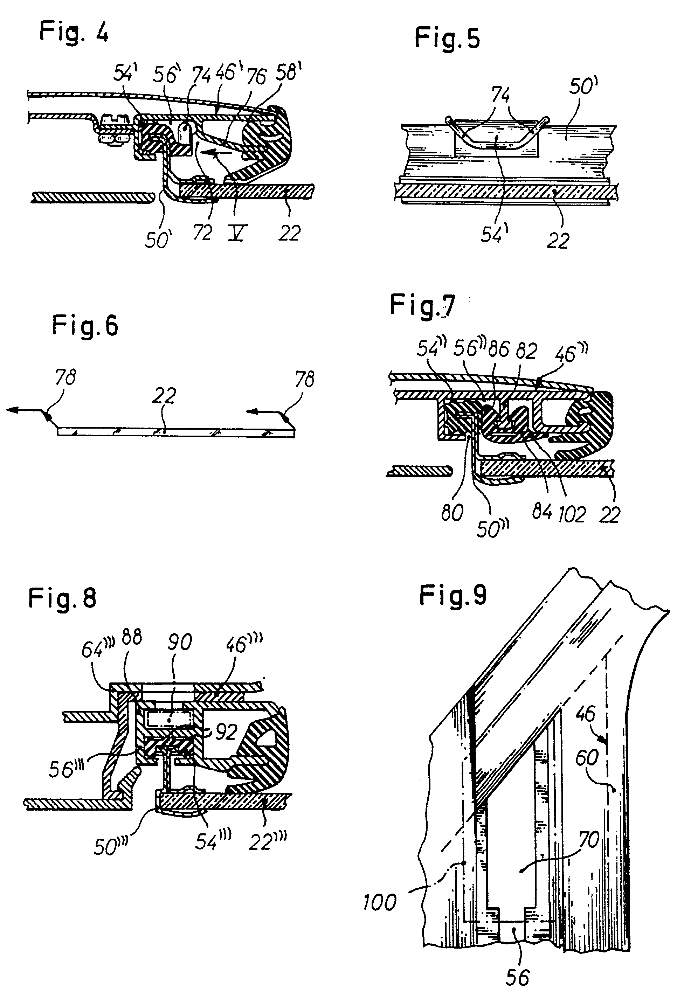

Die Montage der Fensterscheibe 22 geschieht in folgender Weise. Die Fensterscheibe 22 wird so von aussen an den Fensterrahmen 4 bzw. die Fensterdichtung 16 angelegt, dass ihre Unterkante etwa in Höhe des oberen Endes des Spiegeldreieckes 48 liegt. Nun wird sie nach vorne verschoben, bis die Nase 44 der Führungsschiene 20 in das Führungsprofil 18 eingreift bzw. einrastet. In dieser Lage liegt nun das untere Gleitstück 54 an der Fassungsschiene 50 von aussen an der Führungsbahn 56 an. Damit das Gleitstück 54 aber in die Führungsbahn 56 hineingelangen kann, ist diese am oberen Ende mit einem Ausschnitt 70 versehen, der in Fig. 9 ersichtlich ist. Durch den Ausschnitt 70 in den äusseren Stegen der Führungsbahn 56 hindurch wird das Gleitstück 54 in die Führungsbahn 56 hineingedrückt. Nun wird die Fensterscheibe 22 nach unten geschoben, bis ein oberes Gleitstück 54 in den Bereich des Ausschnittes 70 kommt, das dann ebenfalls hineingedrückt wird, worauf die Fensterscheibe 22 noch etwas nach unten geschoben wird, was dann ihre obere Endstellung bzw. Geschlossenstellung ergibt.

Durch diese Ausbildung der Führungsbahn 56 kann der durch die Führungsschiene 46 gebildete Steg sehr schmal und flach gehalten werden, d.h. die Führungsschiene 46 selbst ist sehr schmal und flach. Die Breite der Führungsbahn 56 ist sehr klein. Der Schenkel 52 der Fassungsschiene 50, der den Spalt zwischen Fensterscheibe 22 und Führungsschiene 46 schliesst, ist vom Rand der Fensterscheibe 22 etwas nach innen versetzt. Dadurch wird der Spalt zwischen der Fassungsschiene 50 und dem Spiegeldreieck 48 bzw. der Abdeckung 66 kleiner. Die Gleitstücke 54 sind allseitig von der Führungsbahn 56 umschlossen, so dass eine gute Führung gewährleistet ist.

Die Fig. 4 zeigt eine weitere Ausführungsform der vorderen Fensterscheibenführung. Die Führung des hinteren Randes der Fensterscheibe 22 ist die gleiche wie in Fig. 3. An der Vorderkante ist die Fensterscheibe 22 wieder mit einer Fassungsschiene 50' versehen, an der Gleitstücke 54' angespritzt sind. Bei der Führungsbahn 56' der Führungsschiene 46' ist der äussere und hintere Schenkel teilweise auf die ganze Länge weggeschnitten, so dass die Führungsbahn 56' schräg nach aussen und hinten hin offen ist, d.h. auf die ganze Länge einen Ausschnitt 72 bildet. Die Gleitstücke 54' haben federnde Abschnitte 74, wie sie auch in Fig. 5 dargestellt sind. Der U-Kanal 58' bildet einen schrägen Steg 76. Diese Ausführung erlaubt es, dass die Gleitstücke 54' an jeder Stelle der Führungsbahn 56' in diese eingeführt werden können bzw. einschnappen können, und zwar von schräg hinten her. In Fig. 6 ist durch Pfeile 78 die ungefähre Einführbewegung der Fensterscheibe 22 angedeutet.

Eine weitere Ausbildung der vorderen Fensterführung, die eine ähnliche bzw. gleichartige Montage der Fensterscheibe 22 erlaubt, zeigt Bild 7. Die an der Fassungsschiene 50'' angebrachten Gleitstücke 54'' können durch einen durchgehenden Ausschnitt 80 in der Führungsbahn 56'' an jeder Stelle in diese eingesetzt werden. Ein T-förmiger Steg 82 dient dazu, dass nach dem Einsetzen der Gleitstücke 54'' in die Führungsbahn 56'' auf diesen ein Anschlagprofil 84 aufgeschoben bzw. aufgeklipst wird, und zwar wenn die Fensterscheibe 22 in einer das obere Ende der Führungsbahn 56″ freigebenden Stellung sich befindet. Das Anschlagprofil 84 wird dann auf dem Steg 82 nach unten geschoben. Es verhindert ein Herausgleiten der Gleitstücke 54″ aus der Führungsbahn 56″, wobei der Schenkel 86 des Anschlagprofils 84 federnd gegen die Gleitstücke 54″ anliegt und beflockt sein kann. Auch hier ist der sichtbare Führungsschlitz in der Führungsbahn 56″, durch den die Fassungsschiene 50″ hindurchgeht, sehr klein.

Eine andere Ausbildung der vorderen Führungsschiene zeigt Fig. 8. Im Prinzip entspricht sie der Fig. 3. Lediglich das Profil der Führungsschiene 46‴ ist zum Zwecke ihrer Befestigung an der Türverstärkung 64‴ geändert. An das C-förmige Profil der Führungsbahn 56‴ schliesst sich an seinem Rücken ein weiteres C-förmiges Profil 88 an, das zur Aufnahme von Gewindemuttern 90 dient, in die die nicht dargestellten Schrauben für die Befestigung an der Türverstärkung 64‴ eingeschraubt werden. Das Gleitstück 54‴ an der Fassungsschiene 50‴ ist mit linienförmigen Nokken 92 versehen, die eine linienförmige Anlage in der Führungsbahn 56‴ zum Zwecke eines leichten Gleitens ergeben. Diese Ausbildung der Gleitstücke 54‴ gilt auch für die Gleitstücke 54 bis 54″ der anderen Ausführungsbeispiele. Durch die exakte Führung der Gleitstücke in der Führungsbahn ohne Spiel kann das Spiegeldreieck 48 sehr dicht an die Fassungsschiene 50 herangeführt werden.

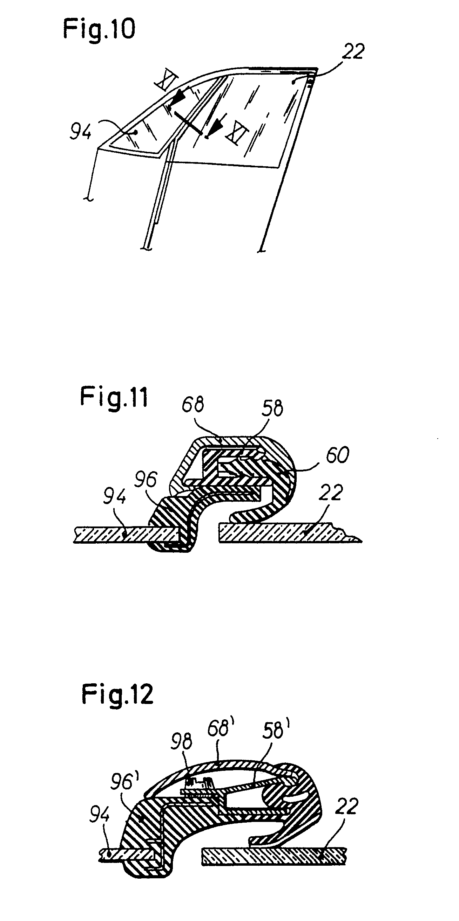

Die Fig. 11 zeigt einen Schnitt nach der Linie XI–XI in Fig. 10 oberhalb der Türverstärkung 64. Hier ist die in Fig. 3 ersichtliche Führungsbahn 56 weggeschnitten, so dass nur noch der U-förmige Kanal 58 für die Fensterdichtung 60 vorhanden ist. Der Anschluss des festen Fensters 94 durch das Anschlussprofil 96 ist hier in einfacher Weise gelöst. Die innere Blende 68 kann sehr schmal gestaltet werden.

Fig. 12 zeigt den gleichen Schnitt nach Linie XI–XI in Fig. 10, jedoch in Anpassung an die Fig. 3. Das Anschlussprofil 96′ ist hier an einem Flansch 98 des U-förmigen Kanals 58′ befestigt und mit von der inneren Blende 68′ abgedeckt.

## Patentansprüche

1. In der Höhe verstellbare Fensterscheibe (22), insbesondere für Kraftfahrzeuge, die bündig mit den angrenzenden Karosserieteilen (12) verläuft und deren Führungsmittel (20) sowie die Fensterdichtung (16) auf der Innenseite der Fensterscheibe (22) angeordnet sind, wobei das Führungsmittel (20) am Fensterrahmen (4) unter Zwischenschaltung eines elastisch nachgiebigen Führungsprofils (18) geführt ist, das entgegen der Vorspannung der Fensterdichtung (16) gegen das Führungsmittel (20) vorgespannt ist und Führungsprofil (18) und Führungsmittel (20) mit Hinterschneidungen (34, 32) versehen sind, dadurch gekennzeichnet, dass die Hinterschneidung (34) am Führungsprofil (18) lediglich an der von der Scheibe (22) abgewandten Seite und die Hinterschneidung (32) am Führungsmittel (Führungsschiene 20) lediglich an der der Scheibe (22) zugewandten Seite des Führungsmittels vorgesehen ist und die Hinterschneidung (34) des Führungsprofils (18) das Einklipsen der Führungsschiene (20) zulässt.

2. Fensterscheibe nach Anspruch 1, dadurch gekennzeichnet, dass die Hinterschneidung (32) der Führungsschiene (20) von einer Umbördelung an der freien Kante der Führungsschiene (20) gebildet ist und Schrägflächen (30) für das Einklipsen in das Führungsprofil (18) aufweist.

3. Fensterscheibe nach den Ansprüchen 1 und 2, dadurch gekennzeichnet, dass die Führungsschiene (20) im Querschnitt gesehen aus zwei in an sich bekannter Weise etwa parallel zur Fensterscheibe (22) verlaufenden Schenkeln (24, 26) besteht, deren einer als Doppelschenkel (26) den Rand der Fensterscheibe (22) von beiden Seiten her umgreift und deren anderer Schenkel (24) mit dem Führungsprofil (18) zusammenwirkt und beide Schenkel (24, 26) auf derselben Seite mit einem Steg (28) verbunden sind, der etwa in Richtung der Schwinglinie der Tür verläuft.

4. Fensterscheibe nach den Ansprüchen 1 bis 3, dadurch gekennzeichnet, dass die Führungsschiene (20) von einem zusammengefalteten Blechstreifen gebildet ist, dessen freie Enden im Abstand voneinander verlaufen und den Doppelschenkel (26) bilden und dessen anderes gefaltetes Ende den anderen Schenkel (24) mit der Hinterschneidung (32) bildet.

5. Fensterscheibe nach den Ansprüchen 1 bis 4, dadurch gekennzeichnet, dass die den Doppelschenkel (26) bildenden und den Rand der Fensterscheibe (22) zwischen sich aufnehmenden Enden mit Hohlräumen (38) zur Aufnahme von überschüssigem Kleber versehen sind.

6. Fensterscheibe nach den Ansprüchen 1 bis 5, dadurch gekennzeichnet, dass das Strangprofil des Führungsprofils (18) an die Hinterschneidung (34) anschliessend zwei im Winkel zueinander stehende Flächen (40) bildet, die als Gleitflächen für den Schenkel (24) und den Steg (28) der Führungsschiene (20) dienen.

7. In der Höhe verstellbare Fensterscheibe (22), insbesondere für Kraftfahrzeuge, die bündig mit den angrenzenden Karosserieteilen (12) verläuft und deren Dichtung (16) und Führungsmittel (20) auf der Innenseite der Scheibe (22) angeordnet sind, wobei die Führungsmittel (20) mit Führungsvorsprüngen (44) in Führungsprofile (18) eingreifen, dadurch gekennzeichnet, dass die Führungsvorsprünge (Nase 44) der an der Hinterkante der Fensterscheibe (22) vorgesehenen Führungsschiene (20) nach vorne gerichtet sind und das Führungsprofil (18) nach hinten offen ist und die Führungsvorsprünge des an der Vorderkante der Fensterscheibe (22) vorgesehenen Führungsmittels (Gleitstücke 54) etwa quer zur Scheibenebene durch Ausschnitte (70,72,80) der zugehörigen Führungsbahn (56) in diese einsetzbar und in dieser in allen Richtungen geführt sind.

8. Fensterscheibe nach Anspruch 7, dadurch gekennzeichnet, dass die Führungsvorsprünge (Nase 44) des hinteren Führungsmittels (Führungsschiene 20) etwa in Fahrzeuglängsrichtung in das Führungsprofil (18) einführbar und die Führungsvorsprünge (54) des vorderen Führungsmittels (Fassungsschiene 50) etwa quer dazu oder schräg in die Führungsbahn (56) einsetzbar sind.

9. Fensterscheibe nach den Ansprüchen 7 und 8, dadurch gekennzeichnet, dass das an der Hinterkante der Fensterscheibe (22) vorgesehene Führungsmittel von in das nach hinten offene Führungsprofil (18) eingreifenden Führungsschienen (20) gebildet ist und das vordere Führungsmittel aus an einer Fassungsschiene (50) angeordneten Gleitstücken (54) besteht.

10. Fensterscheibe nach den Ansprüchen 7 bis 9, dadurch gekennzeichnet, dass die vordere Führungsbahn (56) C-förmig ausgebildet ist und am oberen Ende mit einem Ausschnitt (70) zum Einführen der Gleitstücke (54) versehen ist (Fig. 3, 8 und 9).

11. Fensterscheibe nach den Ansprüchen 7 bis 10, dadurch gekennzeichnet, dass die Gleitstücke (54) mit linienförmigen Nocken (92) zur Anlage bzw. Führung in der Führungsbahn (56) versehen sind.

12. Fensterscheibe nach den Ansprüchen 7 bis 11, dadurch gekennzeichnet, dass der Ausschnitt (70) mit einem flächenförmigen Teil (100) abdeckbar ist, das mit Klipsen oder dergleichen an die Wandungen anklipsbar ist.

13. Fensterscheibe nach den Ansprüchen 7 bis 12, dadurch gekennzeichnet, dass die vordere Führungsbahn (56') schräg nach hinten offen (Ausschnitt 72), d.h. ihr äusserer und hinterer Steg teilweise weggeschnitten ist und das Gleitstück (54') einen federnden Abschnitt (74) aufweist, der ein schräges Einschnappen des Gleitstückes (54') in die Führungsbahn (56') erlaubt.

14. Fensterscheibe nach den Ansprüchen 7 bis 13, dadurch gekennzeichnet, dass die vordere Führungsbahn (56") eine grössere Breite als die des Gleitstückes (5") aufweist und einen Ausschnitt (80) mit einer Breite zum Einsetzen des Gleitstückes (54") besitzt und in die Führungsbahn (56") nach dem Einsetzen des Gleitstückes (54") ein Anschlagprofil (84) zur Führung und Sicherung des Gleitstücks (54") eingesetzt ist.

15. Fensterscheibe nach Anspruch 14, dadurch gekennzeichnet, dass das Anschlagprofil (84) federnd gegen das Gleitstück (54") anliegt.

16. Fensterscheibe nach den Ansprüchen 14 und 15, dadurch gekennzeichnet, dass das Anschlagprofil (84) auf einem Steg (54) der Führungsbahn (56") aufgeschoben oder aufgeklipst ist.

17. Fensterscheibe nach den Ansprüchen 14 bis 16, dadurch gekennzeichnet, dass das Anschlagprofil (84) mit einer an der Führungsschiene (46") anliegenden Abdecklippe (102) versehen ist.

18. Fensterscheibe nach Anspruch 9, dadurch gekennzeichnet, dass der Schenkel (52) der Fassungsschiene (50), an der die Führungsvorsprünge (Gleitstücke 54) angeordnet sind, gegenüber dem Scheibenrand nach innen versetzt ist (Fig. 3 und 8).

19. Fensterscheibe nach den Ansprüchen 7 bis 18, dadurch gekennzeichnet, dass die Führungsschiene (46) mit einem Flansch (62) zur Befestigung der Türverstärkung (64) versehen ist.

20. Fensterscheibe nach den Ansprüchen 7 bis 19, dadurch gekennzeichnet, dass die Führungsschiene (46) mit einem U-förmigen Kanal (58) zur Aufnahme der Fensterdichtung (60) und der Blende innen (68) versehen ist.

21. Fensterscheibe nach den Ansprüchen 7 bis 20, dadurch gekennzeichnet, dass oberhalb der Türverstärkung (64) der die Führungsbahn (56) bildende Teil der Führungsschiene (46) weggeschnitten ist und der U-förmige Kanal (58) für die Fensterdichtung (60) zur Befestigung des benachbarten festen Fensters (94) dient.

22. Fensterscheibe nach den Ansprüchen 7 bis 21, dadurch gekennzeichnet, dass die Führungsschiene (46''') einen Querschnitt enthält, der zwei Rücken an Rücken liegende C-förmige Profile (56''', 88) bildet, von denen das eine als Führungsbahn (56''') und das andere zur Aufnahme von Gewindemuttern (90) für die Befestigung der Führungsschiene (46''') an der Türverstärkung (64''') dient.

## Claims

1. Window pane of adjustable height (22), in particular for motor vehicles, which extends flush with the adjoining body parts (12) and whose guide means (20) as well as the window seal (16) are disposed on the inside of the window pane (22), wherein the guide means (20) is guided on the window frame (4) through the intermediary of an elastically yielding guide profile (18) which is biassed against the guide means (20) against the prestress of the window seal (16), and guide profile (18) and guide means (20) are provided with undercut regions (34, 32), characterised in that the undercut region (34) on the guide profile (18) is provided only on the side facing away from the pane (22), and the undercut region (32) on the guide means (guide rail 20) is provided only on the side of the guide profile facing towards the pane (22), and the undercut region (34) of the guide profile (18) allows the guide rail (20) to be snapped into place.

2. Window pane according to claim 1, characterised in that the undercut region (32) of the guide rail (20) is formed by a bead at the free edge of the guide rail (20), and comprises inclined surfaces (30) for snapping into the guide profile (18).

3. Window pane according to claims 1 and 2, characterised in that the guide rail (20) as seen in cross-section consists of two arms (24, 26) extending approximately parallel to the window pane (22) in a manner known in the art, one of which as a double arm (26) encompasses the edge of the window pane (22) from both sides, while the other arm (24) cooperates with the guide profile (18), and the two arms (24, 26) are connected on the same side to a web (28) which extends approximately in the direction of the swing line of the door.

4. Window pane according to claims 1 to 3, characterised in that the guide rail (20) is formed by a folded sheet metal strip whose free ends extend at a distance from each other and form the double arm (26), and whose other folded end forms the other arm (24) with the undercut region (32).

5. Window pane according to claims 1 to 4, characterised in that the ends which form the double arm (26) and hold the edge of the window pane (22) between them are provided with cavities (38) for receiving excess glue.

6. Window pane according to claims 1 to 5, characterised in that the extruded profile of the guide profile (18) adjoining the undercut region (34) forms two surfaces (40) which are at an angle to each other and which serve as sliding surfaces for the arm (24) and the web (28) of the guide rail (20).

7. Window pane (22) of adjustable height, in particular for motor vehicles, which extends flush with the adjoining body parts (12) and whose seal (16) and guide means (20) are disposed on the inside of the pane (22), wherein the guide means (20) engage by means of guide projections (44) in guide profiles (18), characterised in that the guide projections (tab 44) of the guide rail (20) provided at the rear edge of the window pane (22) extend forwardly and the guide profile (18) is open at the rear, and the guide projections of the guide means (slide blocks 54) provided at the front edge of the window pane (22) can be introduced approximately perpendicularly to the plane of the window through openings (70, 72, 80) in the associated guide track (56), into the latter, and are guided therein in all directions.

8. Window pane according to claim 7, characterised in that the guide projections (tab 44) of the rear guide means (guide rail 20) can be introduced into the guide profile (18) approximately in the longitudinal direction of the vehicle, and the guide projections (54) of the front guide means (holding rail 50) can be inserted approximately perpendicularly thereto or obliquely in the guide track (56).

9. Window pane according to claims 7 and 8, characterised in that the guide means provided at the rear edge of the window pane (22) is formed by guide rails (20) engaging in the guide profile (18) which is open at the rear, and the front guide means consists of slide blocks (54) disposed on a holding rail (50).

10. Window pane according to claims 7 to 9, characterised in that the front guide track (56) is C-shaped and provided at its upper end with an opening (70) for introducing the slide blocks (54) (Figs. 3, 8 and 9).

11. Window pane according to claims 7 to 10, characterised in that the slide blocks (54) are provided with linear cams (92) for abutment or guiding in the guide track (56).

12. Window pane according to claims 7 to 11, characterised in that the opening (70) can be covered with a laminar member (100) which can be clipped to the walls with clips or the like.

13. Window pane according to claims 7 to 12, characterised in that the front guide track (56′) is obliquely open at the rear (opening 72), i.e. its rear outer web is partially cut away, and the slide block (54′) comprises a spring portion (74) which allows the slide block (54′) to snap obliquely into the guide track (56′).

14. Window pane according to claims 7 to 13, characterised in that the front guide track (56″) is wider than the slide block (54″) and has an opening (80) with a width for insertion of the slide block (54″), and after insertion of the slide block (54″) a stop profile (84) for guiding and locking the slide block (54″) is inserted in the guide track (56″).

15. Window pane according to claim 14, characterised in that the stop profile (84) abuts resiliently against the slide block (54″).

16. Window pane according to claim 14 and 15, characterised in that the stop profile (84) is fitted over or clipped onto a web (82) of the guide track (56″).

17. Window pane according to claims 14 to 16, characterised in that the stop profile (84) is provided with a covering lip (102) which abuts against the guide rail (46″).

18. Window pane according to claim 9, characterised in that the arm (52) of the holding rail (50) on which are disposed the guide projections (slide blocks 54) is offset inwardly from the edge of the window pane (Figs. 3 and 8).

19. Window pane according to claims 7 to 18, characterised in that the guide rail (46) is provided with a flange (62) for mounting the door strengthening piece (64).

20. Window pane according to claims 7 to 19, characterised in that the guide rail (46) is provided with a U-shaped channel (58) for receiving the window seal (60), and the cover strip on the inside (68).

21. Window pane according to claims 7 to 20, characterised in that above the door strengthening piece (64) the part of the guide rail (46) which forms the guide track (56) is cut away, and the U-shaped channel (58) for the window seal (60) serves to mount the adjacent fixed window (94).

22. Window pane according to claims 7 to 21, characterised in that the guide rail (46‴) contains a cross-section which forms two C-shaped profiles (56‴, 88) arranged back to back, one of which serves as the guide track (56‴), while the other serves to receive nuts (90) for fixing the guide rail (46‴) to the door strengthening piece (64‴).

**Revendications**

1. Glace de fenêtre (22), notamment pour véhicules automobiles, déplaçable en hauteur et alignée sur les parties de carrosserie voisines (12), son moyen de guidage (20) et le joint de fenêtre (16) étant placés sur son côté intérieur, le moyen de guidage (20) étant guidé sur le châssis de fenêtre (4) sous interposition d'un profilé guide (18) élastiquement souple qui est précontraint contre ledit moyen de guidage (20) à l'encontre de la précontrainte du joint de fenêtre (16), profilé guide (18) et moyen de guidage (20) étant munis de contre-dépouilles (34, 32), caractérisée par le fait que la contre-dépouille (34) du profilé guide (18) est ménagée exclusivement sur le côté du profilé guide (18) non tourné vers ladite glace (22), et la contre-dépouille (32) du moyen de guidage (barre de guidage 20) exclusivement sur le côté tourné vers cette même glace (22), et que la contre-dépouille (34) du profilé guide (18) permet l'enclipsage de la barre de guidage (20).

2. Glace de fenêtre selon la revendication 1, caractérisée par le fait que la contre-dépouille (32) de la barre de guidage (20) est formée d'un rabattement de l'arête libre de cette dernière et présente des pans obliques (30) pour l'enclipsage dans le profilé guide (18).

3. Glace de fenêtre selon les revendications 1 et 2, caractérisée par le fait que, vue en coupe transversale, la barre de guidage (20) se compose de deux branches (24, 26) dirigées, de façon connue, à peu près parallèlement à ladite glace de fenêtre (22) dont l'une, en tant que double branche (26), enserre des deux côtés le bord de cette même glace et dont l'autre (24) coopère avec le profilé guide (18), ces deux branches (24, 26) étant reliées du même côté à une entretoise (28) qui s'étend approximativement en direction de battement de la porte.

4. Glace de fenêtre selon les revendications 1 à 3, caractérisée par le fait que la barre de guidage (20) est formée d'une bande de tôle pliée sur elle-même dont les extrémités libres suivent leur cours à une certaine distance l'une de l'autre en formant la double branche (26) et dont l'autre extrémité, pliée, (26) forme l'autre branche (24) avec la contre-dépouille (32).

5. Glace de fenêtre selon les revendications 1 à 4, caractérisée par le fait que les extrémités formant la double branche (26) et enserrant entre elles le bord de ladite glace (22) sont munies de cavités (38) pour recueillir de la colle en excès.

6. Glace de fenêtre selon les revendications 1 à 5, caractérisée par le fait que le boudin d'extrusion du profilé guide (18) forme à la suite de la contre-dépouille (34) deux pans (40) comprenant un certain angle entre eux, lesquels servent de surfaces de glissement pour une branche (24) et l'entretoise (28) de la barre de guidage (20).

7. Glace de fenêtre (22), notamment pour véhicules automobiles, déplaçable en hauteur et alignée sur les parties de carrosserie voisines (12), son joint (16) et ses moyens de guidage (20) étant placés sur son côté intérieur et les moyens de guidage (20) étant en prise dans des profilés guides (18) par des saillies de guidage (44), caractérisée par le fait que les saillies de guidage (nez 44) de la barre de guidage (20) montée sur l'arête arrière de ladite glace de fenêtre (22) sont dirigées vers l'avant, que le profilé guide (18) est ouvert en direction de l'arrière et que les saillies, ou avancées, de guidage du moyen de guidage (patins 54) prévu sur l'arête avant de cette même glace de fenêtre (22) sont insérables dans la bande guide correspondante (56) à peu près transversalement au plan de la glace à travers des échancrures (70, 72, 80) de ladite bande guide (56) et sont guidées en toutes directions dans cette dernière.

8. Glace de fenêtre selon la revendication 7, caractérisée par le fait que les saillies de guidage (nez 44) du moyen de guidage arrière (barre de guidage 20) sont insérables dans le profilé guide (18) en direction voisine de la direction longitudinale du véhicule et que les saillies, ou avancées, de guidage (54) du moyen de guidage (barre d'encadrement 50) avant sont insérables dans la bande guide (56) à peu près transversalement ou obliquement à cette première direction.

9. Glace de fenêtre selon les revendications 7 et 8, caractérisée par le fait que le moyen de guidage monté sur l'arête arrière de ladite glace de fenêtre (22) est formé de barres de guidage (20) en prise dans le profilé guide (18) ouvert en direction de l'arrière et que le moyen de guidage avant se compose de patins (54) placés sur une barre d'encadrement (50).

10. Glace de fenêtre selon les revendications 7 à 9, caractérisée par le fait que la bande guide avant (56) a une forme de «C» et comporte à son extrémité supérieure une échancrure (70) pour l'introduction des patins (54) (fig. 3, 8 et 9).

11. Glace de fenêtre selon les revendications 7 à 10, caractérisée par le fait que les patins (54) comportent des cames linéaires (92) pour leur appui ou guidage dans la bande-guide (56).

12. Glace de fenêtre selon revendications 7 à 11, caractérisée par le fait que l'échancrure (70) est recouvrable par une partie plane (100) qui est enclipsable sur les parois par des clips ou autres moyens analogues.

13. Glace de fenêtre selon les revendications 7 à 12, caractérisée par le fait que la bande guide avant (56') est ouverte obliquement (échancrure 72) vers l'arrière, c'est-à-dire que sa partie extérieure et arrière est partiellement coupée, et que le patin (54') présente un segment élastique (74) qui permet un encliquetage oblique dudit patin (54') dans ladite bande guide (56').

14. Glace de fenêtre selon les revendications 7 à 13, caractérisée par le fait que la bande guide avant (56″) a une largeur supérieure à celle du patin (54″) et présente une échancrure (80) d'une largeur permettant l'introduction dudit patin (54″) et qu'après ladite introduction un profilé de butée (84) est inséré dans la bande guide (56″) pour guider et bloquer ce même patin (54″).

15. Glace de fenêtre selon la revendication 14, caractérisée par le fait que le profilé de butée (84) est appuyé élastiquement contre le patin (54″).

16. Glace de fenêtre selon les revendications 14 et 15, caractérisée par le fait que le profilé de butée (84) est glissé ou enclipsé sur une barrette (54) de la bande guide (56″).

17. Glace de fenêtre selon revendications 14 à 16, caractérisée par le fait que le profilé de butée (84) est muni d'une lèvre de recouvrement (102) en appui contre la barre guide (46″).

18. Glace de fenêtre selon les revendications 9, caractérisée par le fait que la branche (52) de la barre d'encadrement (50) porteuse des avancées de guidage (patins 54) est décalée vers l'intérieur (fig. 3 et 8) par rapport au bord de ladite glace.

19. Glace de fenêtre selon les revendications 7 à 18, caractérisée par le fait que la barre guide (46) est munie d'un flasque (62) pour la fixation du renfort de porte (64).

20. Glace de fenêtre selon les revendications 7 à 19, caractérisée par le fait que la barre guide (46) est munie d'un canal intérieur (58) en forme de «U» pour le logement du joint de fenêtre (60) et de l'obturateur (68).

21. Glace de fenêtre selon les revendications 7 à 20, caractérisée par le fait que la partie de la barre guide (46) qui forme la bande guide (56) est coupée au-dessus du renfort de porte (64) et que le canal (58) en forme de «U» destiné au joint de fenêtre (60) sert à la fixation de la fenêtre fixe voisine (74).

22. Glace de fenêtre selon les revendications 7 à 21, caractérisée par le fait que la barre guide (46‴) a une section qui forme dos à dos deux profilés en «C» (56‴, 88) dont l'un sert de bande guide (56‴), et l'autre au logement d'écrous filetés (90) pour la fixation de ladite barre guide (46‴) au renfort de porte (64‴).

Fig.1

Fig.2

Fig.3

0 121 820

**Fig. 4**

**Fig.5**

**Fig.6**

**Fig.7**

**Fig. 8**

**Fig.9**

13

# Fig.10

22

94

# Fig.11

68    58

96    60

94    22

# Fig.12

98    68'    58'

96'

94    22